(19) **Europäisches Patentamt / European Patent Office / Office européen des brevets**

(11) **EP 2 201 067 B1**

(12) **FASCICULE DE BREVET EUROPEEN**

(45) Date de publication et mention de la délivrance du brevet:
**31.05.2017 Bulletin 2017/22**

(21) Numéro de dépôt: **08838930.9**

(22) Date de dépôt: **17.10.2008**

(51) Int Cl.:
*C08L 77/06* [(2006.01)]   *C08K 7/02* [(2006.01)]

(86) Numéro de dépôt international:
**PCT/EP2008/064041**

(87) Numéro de publication internationale:
**WO 2009/050268 (23.04.2009 Gazette 2009/17)**

(54) **COMPOSITION POLYMERE THERMOPLASTIQUE A BASE DE POLYAMIDE**

THERMOPLASTISCHE POLYMERZUSAMMENSETZUNG AUF POLYAMIDBASIS

THERMOPLASTIC POLYMER COMPOSITION CONTAINING POLYAMIDE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.10.2007 FR 0707329**

(43) Date de publication de la demande:
**30.06.2010 Bulletin 2010/26**

(73) Titulaire: **Rhodia Opérations**
**93306 Aubervilliers (FR)**

(72) Inventeurs:
• **TROUILLET-FONTI, Lise**
  **F-38200 Villette-de-Vienne (FR)**
• **AMICI, Marco**
  **I-06131 Perugia (IT)**
• **LAPIERRE, Christophe**
  **F-69330 Jonage (FR)**

(74) Mandataire: **Benvenuti, Federica et al**
**Solvay S.A.**
**Département de la Propriété Intellectuelle**
**Rue de Ransbeek, 310**
**1120 Bruxelles (BE)**

(56) Documents cités:
**WO-A1-2008/107314    FR-A- 2 810 332**
**JP-A- 6 345 960**

• DAVIDSON T ET AL: "Flow response and microstructure of polymers reinforced with discontinuous fibers" MATERIALS RESEARCH SOCIETY SYMPOSIUM PROCEEDINGS, MATERIALS RESEARCH SOCIETY, PITTSBURG, PA, US, vol. 289, 1993, pages 231-235, XP009098499 ISSN: 0272-9172

**Description**

La présente invention concerne une composition polymère thermoplastique à base de polyamide, présentant un excellent compromis de propriétés, notamment de propriétés mécaniques et une haute fluidité en fondu. L'invention concerne notamment une composition comprenant au moins un polyamide de haute fluidité et une forte proportion de charges, telles que des fibres de verre ; ainsi qu'un procédé pour la fabrication d'une telle composition.

## ART ANTERIEUR

Parmi les propriétés que l'on cherche souvent à contrôler pour un matériau thermoplastique destiné à être mis en forme par des techniques telles que l'injection, l'injection-gaz, l'extrusion, l'extrusion-soufflage, on cite la rigidité, la résistance aux chocs, la stabilité dimensionnelle, en particulier à température relativement élevée, le faible retrait après mise en forme, l'aptitude à la mise en peinture par différents procédés, l'aspect de surface, la densité. Ces propriétés peuvent être contrôlées, dans certaines limites, par le choix d'un polymère ou par l'adjonction au polymère de composés de différentes natures. Dans ce dernier cas, on parle de compositions polymères. Le choix d'un matériau pour une application donnée est généralement guidé par le niveau de performance exigé vis à vis de certaines propriétés et par son coût. On cherche toujours de nouveaux matériaux susceptibles de répondre à un cahier des charges en terme de performance et/ou de coût. Le polyamide est par exemple un matériau largement utilisé, notamment dans le domaine de l'industrie automobile.

Le polyamide est un polymère qui est résistant chimiquement, qui est stable à des températures élevées et qui peut être mélangé à différents types de charges afin d'en modifier les propriétés. On peut par exemple améliorer ses propriétés mécaniques en ajoutant des charges de renfort fibreuses ou non.

Le document JP H06 345960 A décrit une composition de 30-60% de polyamide et 40-70% de fibres de verre ayant une viscosité apparente comprise entre 100-5000 P soit entre 10-500 Pa.s à un taux de cisaillement de 1000 s-1.

Le document de DAVIDSON T ET AL: "Flow response and microstructure of polymers reinforced with discontinuous fibers" MATERIALS RESEARCH SOCIETY SYMPOSIUM PROCEEDINGS, MATERIALS RESEARCH SOCIETY, PITTSBURG, PA, US, vol. 289, 1993, pages 231-235, décrit des compositions de nylon 66 avec 30-60% de fibres. Pour obtenir des matériaux polyamide de hautes performances, il est possible en théorie d'ajouter une forte proportion de charges de renfort dans la composition polyamide. Toutefois, à de hautes teneurs en charge de renfort, les articles présentent de très mauvais aspects de surface, et les compositions polyamides présentent un comportement rhéologique peu adéquat avec les procédés de mise en forme d'intérêt, notamment le moulage par injection. Par ailleurs, de tels compositions sont difficiles à mettre en oeuvre et il est souvent nécessaire d'augmenter la pression et/ou la température dans lesdits procédés de mise en forme.

De plus, il apparaît que des compositions à base de polyamide comprenant de fortes teneurs en charge de renfort vont conduire à l'obtention d'articles moulés ayant une forte anisotropie du retrait, notamment à cause de l'orientation des charges telles que les fibres de verre.

Par ailleurs, il est difficile de réaliser des articles moulés ayant de très bonnes performance en terme de propriétés mécaniques, même avec un fort taux de charges de renfort, car la proportion importante de ces charges va induire des zones de fragilité mécaniques aux endroits où les écoulements de matières se rencontrent à l'intérieur des moules, lors du procédé de moulage. Ces zones sont appelées les lignes de recollement des fronts de matière des pièces moulées.

Il existe ainsi un besoin de mettre au point une composition polyamide présentant un fort taux de charges de renfort n'ayant pas les inconvénients mentionnés précédemment.

## INVENTION

La demanderesse a mis en évidence des compositions polyamides présentant une fluidité en fondu augmentée et des propriétés mécaniques équivalentes ou supérieures, par rapport aux compositions polyamides classiques, et permettant la réalisation d'articles ayant un excellent aspect de surface, lorsque ceux-ci comprennent un fort taux de charges. Il apparaît de plus que ces compositions sont faciles à mettre en oeuvre dans les procédés de mise en forme d'intérêt, notamment le moulage par injection.

Par ailleurs, on observe que des articles moulés à partir des compositions à base de polyamide de l'invention présentent un retrait limité quasiment isotrope, ce qui est susceptible de diminuer le voilage desdits articles. Par ailleurs, la combinaison des polyamides de hautes fluidité et de la présence d'importantes teneurs en charge de renfort permet le moulage d'articles pour lesquels, la ligne de recollement des fronts de matière des pièces moulées présente une bonne résistance mécanique.

L'invention a ainsi pour objet une composition comprenant au moins :

a) un polyamide de type 66 obtenu par un procédé de polymérisation des monomères du polyamide 66 en présence en outre de composés monofonctionnels et/ou difonctionnels comprenant des fonctions acides carboxyliques ou amines ;
b) une teneur en charges de renfort supérieure ou égale à 45 % en poids par rapport au poids total de la composition ;
c) ladite composition présentant une viscosité apparente en phase fondue, en Pa.s, selon les relations suivantes :

$$\eta 100 \leq 30(X) - 800$$

$$\eta 1000 \leq 11(X) - 280$$

dans lesquelles η est la viscosité apparente en phase fondue de la composition polyamide mesurée à une température de 275°C ; soit à un taux de cisaillement de 100 s$^{-1}$, η100, soit à un taux de cisaillement de 1000 s$^{-1}$, η1000 ; et X correspond à la proportion en poids de charges de renfort, par rapport au poids total de la composition. Le polyamide présente un indice de fluidité en fondu supérieur ou égal à 10 g/10 min selon la norme ISO1133 mesuré à une température de 275°C avec une charge de 325 g. Le polyamide a) est un polyamide thermoplastique du type 66, c'est-à-dire un polyamide obtenu au moins à partir d'acide adipique et d'hexaméthylène diamine ou de leur sels tels que l'adipate d'hexaméthylènediamine, pouvant éventuellement comprendre d'autres monomères de polyamide.

Le polyamide selon l'invention peut présenter un poids moléculaire Mn compris entre 3000 et 17000 g/mol, préférentiellement entre 11000 et 17000, plus préférentiellement entre 11000 et 15000 et encore plus préférentiellement entre 12000 et 14500.

Il peut aussi présenter un indice de polydispersité (D=Mw/Mn) inférieur ou égal à 2.

La polymérisation du polyamide de l'invention est notamment réalisée selon les conditions opératoires classiques de polymérisation des polyamides, de manière continue ou discontinue.

Un tel procédé de polymérisation peut comprendre brièvement :

- un chauffage sous agitation et sous pression du mélange des monomères et composés multifonctionnels (i) et monofonctionnels (ii),
- un maintien du mélange sous pression et température pendant une durée déterminée, avec élimination de vapeur d'eau par un dispositif approprié, puis décompression et maintien pendant une durée déterminée à une température supérieure au point de fusion du mélange, notamment sous pression autogène de vapeur d'eau, sous azote ou sous vide, pour ainsi continuer la polymérisation par élimination de l'eau formée.

En sortie de polymérisation, le polymère peut être refroidi avantageusement par de l'eau, et extrudé sous forme de joncs. Ces joncs sont coupés pour produire des granulés.

Selon l'invention, le polyamide est fabriqué par ajout en polymérisation, notamment au début de la polymérisation, des monomères du polyamide 66, en présence en outre de composés difonctionnels et/ou monofonctionnels. Ces composés difonctionnels et/ou monofonctionnels présentent des fonctions amines ou acides carboxyliques capable de réagir avec les monomères du polyamide. Les composés difonctionnels peuvent présenter la même fonctionnalité amine ou acide carboxylique. Les fonctions amine peuvent être des fonctions amines primaires et/ou secondaire.

Les composés difonctionnels et/ou monofonctionnels utilisés sont des agents modifiant la longueur de chaînes des polyamides et permettant d'obtenir des polyamides ayant un indice de fluidité en fondu supérieur ou égal à 10 g/10 min. selon la norme ISO1133 mesuré à une température de 275°C avec une charge de 325 g, préférentiellement entre 10 et 50 g/10 min., plus préférentiellement entre 15 et 50 g/10 min et encore plus préférentiellement entre 20 et 40 g/10 min.

On peut utiliser au début, en cours ou en fin de polymérisation tout type d'acides mono- ou di-carboxylique, aliphatiques ou aromatiques ou tout types d'amines mono- ou di-amines, aliphatiques ou aromatiques. On peut notamment utiliser comme composé monofonctionnel la n-dodécylamine et la 4-amino-2,2,6,6-tétraméthylpipéridine, l'acide acétique, l'acide laurique, la benzylamine, l'acide benzoïque et l'acide propionique . On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subérique, les dimères d'acides gras, la di(β-éthylcarboxy) cyclohexanone, l'hexaméthylène diamine, la méthyl-5 pentaméthylène diamine, la métaxylylène diamine, la butanediamine, l'isophorone diamine, le 1,4 diamino cyclohexane, la 3,3',5-triméthyl hexaméthylènediamine.

On peut également utiliser un excès d'acide adipique ou un excès d'hexaméthylène diamine pour la production d'un polyamide de type 66 présentant une fluidité en fondu élevée.

Préférentiellement, la proportion en groupements terminaux acides est différente de la proportion en groupement terminaux amines, notamment au moins deux fois supérieure ou inférieure. Les quantités de groupements terminaux amines (GTA) et/ou acides (GTC) sont déterminées par dosages potentiométriques après dissolution du polyamide. Une méthode est par exemple décrite dans "Encyclopedia of Industrial Chemical Analysis", volume 17, page 293, 1973.

On préfère notamment une composition présentant une viscosité apparente en phase fondue, en Pa.s, selon les relations suivantes :

$$\eta 100 \leq 20(X) - 400$$

$$\eta 1000 \leq 9(X) - 240$$

On préfère encore plus préférentiellement une composition présentant une viscosité apparente en phase fondue, en Pa.s, selon les relations suivantes :

$$\eta 100 \leq 20(X) - 450$$

$$\eta 1000 \leq 7(X) - 160$$

Comme charge de renfort, ou charge de remplissage, on peut citer notamment celles choisies dans le groupe comprenant les charges fibreuses telles que les fibres de verre, les fibres de carbone, les fibres naturelles, et/ou les charges non fibreuses. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 $\mu$m. Ces charges peuvent présenter une longueur moyenne comprise entre 0,1 et 5 mm. Ces charges peuvent présenter un ensimage surfacique qui assure l'adhésion mécanique entre les fibres et la matrice polyamide, notamment en condition environnementale critique, tel que par exemple, en contact avec les fluides des moteurs.

La composition peut notamment comprendre de 50 à 80 % en poids de charge de renfort, par rapport au poids total de la composition.

Compte tenu des hautes performances des composition polyamides selon l'invention, il n'est notamment pas utile que celle-ci comprenne des agents modificateurs du chocs. Ainsi, de manière préférentielle, la composition selon l'invention ne comprend pas d'agents modificateurs de chocs, notamment ceux présentant une base élastomérique comprenant des groupements fonctionnels réactifs avec le polyamide.

La composition peut comprendre, outre le polyamide modifié de l'invention, un ou plusieurs autres polymères, de préférence polyamides ou copolyamides.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les catalyseurs, les stabilisants lumière et/ou thermique, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu.

La viscosité apparente en phase fondue de la composition polyamide selon la présente invention peut être mesurée selon la norme ISO 11443, notamment en utilisant un rhéomètre capillaire Göttfert Rheograph 2002. On peut par exemple utiliser un capillaire de longueur 30 mm et de diamètre 1 mm, avec un piston ayant un diamètre de 12 mm ; et par exemple procéder à la mesure avec des échantillons ayant une humidité résiduelle inférieure à 0,06%.

Les compositions thermoplastiques sont généralement obtenues par mélange des différents composés entrant dans la composition, les composés thermoplastiques étant sous forme fondue. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, soumise à une force de cisaillement, et véhiculée. De tels dispositifs sont parfaitement connus de l'homme du métier.

Selon un premier mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important.

On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

La composition selon l'invention peut être utilisée pour tout procédé de mise en forme des matières plastiques, tels que par exemple le procédé de moulage par injection. La présente invention concerne ainsi aussi un procédé de moulage par injection dans lequel on introduit dans un dispositif de moulage par injection une composition selon l'invention et l'on procède au moulage.

Ledit procédé peut notamment être réalisé en absence, ou bien en présence d'un fluide à l'état supercritique pour la réalisation d'articles microcellulaires.

L'utilisation des compositions selon l'invention est particulièrement intéressante dans le cadre de la fabrication d'articles pour l'industrie automobile ou électrique, en particulier pour le moulage des pièces fines, de grandes tailles et/ou à la géométrie complexe, tels que par exemple des ailes de voitures ou des disjoncteurs.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

## PARTIE EXPERIMENTALE

Les composés utilisés sont les suivants :

- PA1: Polyamide 66 ayant un MFI de 4,5 g/10 minutes (selon la norme ISO1133 mesuré à 275°C sous 325 g de charge) et un IV de 135 ml/g (selon la norme ISO 307). Teneurs en groupements terminaux suivants : GTA = 50 meq/kg, GTC = 80 meq/kg.
- PA2 : Polyamide 66 ayant un MFI de 30 g/10 minutes et un IV de 98 ml/g. Teneurs en groupements terminaux suivants : GTA = 30 meq/kg, GTC = 93 meq/kg. Obtenu par ajout en début de polymérisation de 0,5% molaire d'acide acétique.
- PA3: Polyamide 66 ayant un MFI de 27 g/10 minutes et un IV de 101 ml/g. Teneurs en groupements terminaux suivants : GTC = 65 meq/kg, GTA = 50 meq/kg. Obtenu par ajout en début de polymérisation de 0,6% molaire d'acide acétique et de 0,4% molaire d'hexaméthylènediamine.

- Fibres de verre : Vetrotex 995
- Stabilisant chaleur : CuI et KI (respectivement <0,02% et <0,1% en fraction de masse)
- Additifs : cire EBS, et nigrosine vendu sous la dénomination 54/1033 par la société Ferroplast.

Les compositions sont préparées par mélange en phase fondue, à l'aide d'une extrudeuse bi-vis de type WERNER et PFLEIDERER ZSK, des polyamides, de 50 % en poids de fibres de verre, et de 1,5 % en poids d'additifs. Les conditions d'extrusion sont les suivantes : Température: entre 240 et 280°C, Vitesse de rotation: entre 200 et 300 tours/min, Débit entre 25 et 60 kg/heure.

Les résultats sont mentionnés dans le Tableau 1

Tableau 1

| Compositions | C1 | 1 | 2 |
|---|---|---|---|
| PA 1 | 48,5 | | |
| PA 2 | | 48,5 | |

(suite)

| Compositions | C1 | 1 | 2 |
|---|---|---|---|
| PA 3 | | | 48,5 |
| Additifs différents (CuI, KI, cire, nigrosine, etc) | 1,5 | 1,5 | 1,5 |
| Fibres de verre | 50 | 50 | 50 |
| Total | 100 | 100 | 100 |
| Taux de cendre ISO 3451/1A 30 min à 750°C (%) | 49,8 | 50,1 | 50,1 |
| IV ISO 307 (ml/g) | 135 | 98 | 101 |
| Point de fusion ISO 11357-3 (°C) | 263,8 | 264,3 | 265,63 |
| Température de cristallisation ISO 11357-3 (°C) | 223,5 | 225,5 | 225,28 |
| Résilience Charpy avec entailles ISO 179\1 eA (KJ/m$^2$) | 13,7 | 14,4 | 14,1 |
| Résilience Charpy sans entaille ISO 179\1eU (KJ/m$^2$) | 93,8 | 102,8 | 99,0 |
| Résilience Charpy sans entaille ISO 179\1eU (KJ/m$^2$) après 1000 hrs à 150°C | 51,2 | 62,1 | 59,8 |
| Résistance à la traction ISO 527 (N/mm$^2$) | 221 | 248 | 245 |
| Allongement à la traction ISO 527 (%) | 2,7 | 2,9 | 2,9 |
| Module de traction ISO 527 (N/mm$^2$) | 16,5 | 16,7 | 16,9 |
| η 100 (Pa.s) | 1030 | 452 | 513 |
| η 1000 (Pa.s) | 434 | 138 | 195 |
| Test spirale (cm) | 19 | 27 | 25 |
| Retrait parallèle (%) | 0,43 | 0,34 | 0,33 |
| Retrait perpendiculaire (%) | 0,68 | 0,42 | 0,47 |
| Retrait Delta (%) | 0,25 | 0,08 | 0,14 |
| Résistance à la traction de la ligne de recollement (MPa) | 59 | 108 | 98 |
| Pourcentage de résistance à la traction de la ligne de recollement (%) | 24 | 43 | 40 |
| Aspect de surface | mauvais | bon | bon |

L'analyse de rhéomètre capillaire a été effectué selon la norme ISO 11443 sur les granulés secs à l'aide d'un rhéomètre GOTTFERT RHEOGRAPH 2002, avec notamment un transducteur de 1000 bar, capillaire type Roundhole 30mm x 1 mm en diamètre, avec un piston de 12 mm en diamètre et vitesse (mm/sec) : 0,01 ; 0,02 ; 0,05 ; 0,1 ; 0,2 ; 0,5 ; 1,0 ; 2,0 ; 5,0.

La température de fusion a été mesuré selon la norme ISO 11357-3 (DSC « METTLER DSC 20 », avec une rampe de température de 10°C/min).

Le test spiral permet de quantifier la fluidité des compositions en mettant en fusion les granulés et en les injectant dans un moule en forme de spirale de section rectangulaire, d'épaisseur 2 mm et de largeur 4 cm, dans une presse BM-Biraghi 85T à une température de fourreau de 275°C, une température de moule de 80°C et avec une pression d'injection maximale de 130 bar hydrauliques, ce qui correspond à un temps d'injection d'environ 0,4 secondes. Le résultat est exprimé en longueur de moule rempli correctement par la composition.

Le retrait est mesuré après obtention de plaques moulées par injection en un point latéral, à une humidité relative inférieure à 0,2 %, de dimensions 100 x 100 x 3,4 mm, stockées dans un container étanche à 23°C pendant 24 heures au moins ; et évaluées à sec à 23°C /HR 50% avec un micromètre à 0,01 mm prêt.

Les injections de ces plaques sont réalisées sur une presse DEMAG 80T à une température de fourreau de 280°C, une température moule de 80°C et avec une pression de maintien de 20 bar hydrauliques pendant 15 secondes pour un temps d'injection d'environ 0,55 secondes.

Le retrait est l'écart entre la cote du moule et la mesure de la plaque / cote du moule et exprimé en pourcentage.

La résistance à la traction de la ligne de recollement des fronts de matière est mesurée selon la norme ISO 527 sur des éprouvettes de type haltères moulées par injection avec un moule comprenant un point d'injection disposé à chaque extrémité de sa longueur ; ce point ayant un seul en forme de nappe.

On observe ainsi que les articles moulés obtenus selon l'invention présentent un excellent compromis de fluidité en fondu et de propriétés mécaniques tout en ayant un bon aspect de surface. Par ailleurs, les compositions selon l'invention permettent la fabrication d'articles présentant un retrait isotrope par rapport à des compositions fortement chargées comprenant un polyamide ayant une rhéologie usuelle. Il apparaît également que les compositions selon l'invention permettent la réalisation d'articles pour lesquels la ligne de recollement présente une bonne résistance à la traction.

**Revendications**

1. Composition comprenant au moins :

   a) un polyamide de type 66 obtenu par un procédé de polymérisation des monomères du polyamide 66 en présence en outre de composés monofonctionnels et/ou difonctionnels comprenant des fonctions acides carboxyliques ou amines ;
   b) un teneur en charges de renfort supérieure ou égale à 45 % en poids par rapport au poids total de la composition ;
   c) ladite composition présentant une viscosité apparente en phase fondue, en Pa.s, selon les relations suivantes :

$$\eta 100 \leq 30(X) - 800$$

$$\eta 1000 \leq 11(X) - 280$$

   dans lesquelles $\eta$ est la viscosité apparente en phase fondue de la composition polyamide mesurée à une température de 275°C ; soit à un taux de cisaillement de 100 $s^{-1}$, $\eta 100$, soit à un taux de cisaillement de 1000 $s^{-1}$, $\eta 1000$ ; et X correspond à la proportion en poids de charges de renfort, par rapport au poids total de la composition et le polyamide présente un indice de fluidité en fondu supérieur ou égal à 10 g/10 min selon la norme ISO1133 mesuré à une température de 275°C avec une charge de 325 g.

2. Composition selon la revendication 1, **caractérisé en ce que** le polyamide présente un poids moléculaire Mn compris entre 3000 et 17000 g/mol.

3. Composition selon l'une quelconque des revendications 1 à 2, **caractérisé en ce que** les charges de renfort sont choisies dans le groupe comprenant les charges fibreuses et/ou non-fibreuses.

4. Composition selon l'une quelconque des revendications 1 à 3, **caractérisée en ce que** les charges sont des charges fibreuses choisies dans le groupe comprenant les fibres de verre, les fibres de carbone, et/ou les fibres naturelles.

5. Composition selon l'une quelconque des revendications 1 à 4, **caractérisée en ce que** les charges sont des charges non fibreuses choisies dans le groupe comprenant : les charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques, les billes de verre ou de la poudre de verre.

6. Composition selon l'une quelconque des revendications 1 à 5, **caractérisée en ce que** la teneur en charges de renfort est comprise entre 50 à 80 % en poids de charge de renfort, par rapport au poids total de la composition.

7. Composition selon l'une quelconque des revendications 1 à 6, **caractérisée en ce que** la composition ne comprend pas d'agents modificateurs de chocs.

8. Procédé de moulage par injection dans lequel on introduit dans un dispositif de moulage par injection une composition selon l'une quelconque des revendications 1 à 7 et l'on procède ensuite au moulage.

9. Article moulé comprenant une composition selon l'une quelconque des revendications 1 à 7.

**Patentansprüche**

1.  Zusammensetzung, umfassend mindestens

    a) ein Polyamid des Typs 66, das durch ein Verfahren zur Polymerisierung der Monomere von Polyamid 66 und des Weiteren in Anwesenheit von monofunktionellen und/oder bifunktionellen Verbindungen, die Carbon- oder Aminosäurefunktionen umfassen, gewonnen wird;
    b) einen Gehalt an Verstärkungsfüllstoffen von größer oder gleich 45 Gew.- %, bezogen auf das Gesamtgewicht der Zusammensetzung;
    c) wobei die Zusammensetzung eine scheinbare Viskosität, in Pa.s in der Schmelzphase gemäß den folgenden Relationen aufweist :

$$\eta 100 \leq 30(X) - 800$$

$$\eta 1000 \leq 11(X) - 280,$$

    in denen η die scheinbare Viskosität in der Schmelzphase der Polyamidzusammensetzung, gemessen bei einer Temperatur von 275°C, darstellt, entweder η100 bei einer Schergeschwindigkeit von 100 s$^{-1}$ oder η1000 bei einer Schergeschwindigkeit von 1000 s$^{-1}$ und X dem Verhältnis des Gewichts der Verstärkungsfüllstoffe zum Gesamtgewicht der Zusammensetzung entspricht;

    wobei das Polyamid einen Schmelzflussindex von größer oder gleich 10 g/10 min gemäß der Norm ISO 1133, gemessen bei einer Temperatur von 275°C mit einer Last von 325 g, aufweist.

2.  Zusammensetzung nach Anspruch 1, **dadurch gekennzeichnet, dass** das Polyamid ein Molekulargewicht Mn zwischen 3000 und 17000 g/mol aufweist.

3.  Zusammensetzung nach einem beliebigen der Ansprüche 1 bis 2, **dadurch gekennzeichnet, dass** die Verstärkungsfüllstoffe aus der Gruppe umfassend faserförmige und/oder nicht faserförmige Füllstoffe ausgewählt sind.

4.  Zusammensetzung nach einem beliebigen der Ansprüche 1 bis 3,
    **dadurch gekennzeichnet, dass** die Füllstoffe faserförmige Füllstoffe sind, die aus der Gruppe umfassend Glasfasern, Kohlenstofffasern und/oder Naturfasern ausgewählt sind.

5.  Zusammensetzung nach einem beliebigen der Ansprüche 1 bis 4,
    **dadurch gekennzeichnet, dass** die Füllstoffe nicht faserförmige Füllstoffe sind, die aus der Gruppe umfassend Partikelfüllstoffe, lamellare und/oder exfolierbare oder nicht exfolierbare Nanofüllstoffe wie Aluminiumoxid, Ruß, Tonerden, Zirconiumphosphat, Kaolin, Calciumcarbonat, Kupfer, Diatomeenerden, Graphit, Glimmer, Siliciumdioxid, Titandioxid, Zeolithe, Talk, Wollastonit, Polymerfüllstoffe, Glaskugeln oder Glaspulver, ausgewählt sind.

6.  Zusammensetzung nach einem beliebigen der Ansprüche 1 bis 5,
    **dadurch gekennzeichnet, dass** der Gehalt an Verstärkungsfüllstoffen zwischen 50 und 80 Gew.- % an Füllstoffen, bezogen auf das Gesamtgewicht der Zusammensetzung, liegt.

7.  Zusammensetzung nach einem beliebigen der Ansprüche 1 bis 6,
    **dadurch gekennzeichnet, dass** die Zusammensetzung keine Schlagzähmodifikatoren enthält.

8.  Spritzgießverfahren, bei dem eine Zusammensetzung nach einem beliebigen der Ansprüche 1 bis 7 in eine Spritzgießvorrichtung eingebracht wird und anschließend der Gießvorgang erfolgt.

9.  Geformter Artikel, der eine Zusammensetzung nach einem beliebigen der Ansprüche 1 bis 7 enthält.

**Claims**

1.  Composition comprising at least:

    a) a polyamide of PA-6,6 type obtained by a process of polymerization of monomers of polyamide PA-6,6 in the presence, in addition, of monofunctional and/or difunctional compounds comprising carboxylic acid or amine functional groups;
    b) a content of reinforcing fillers greater than or equal to 45 % by weight relative to the total weight of the composition;
    c) said composition having an apparent melt viscosity, in Pa.s, according to the following relationships :

    $$\eta 100 \leq 30(X) - 800$$

    $$\eta 1000 \leq 11(X) - 280$$

    in which $\eta$ is the apparent melt viscosity of the polyamide composition measured at a temperature of 275°C; either at a shear rate of 100 s$^{-1}$, $\eta 100$, or at a shear rate of 1000 s$^{-1}$, $\eta 1000$; and X corresponds to the weight proportion of reinforcing fillers relative to the total weight of the composition, the polyamide has a melt flow index greater than or equal to 10 g/10 min according to the standard ISO 1133 measured at a temperature of 275°C with a load of 325 g.

2.  Composition according to Claim 1, **characterized in that** the polyamide has a molecular weight $M_n$ between 3000 and 17 000 g/mol.

3.  Composition according to either one of Claims 1 and 2, **characterized in that** the reinforcing fillers are selected from the group consisting of fibrous and/or non-fibrous fillers.

4.  Composition according to any one of Claims 1 to 3, **characterized in that** the fillers are fibrous fillers selected from the group consisting of glass fibres, carbon fibres, and/or natural fibres.

5.  Composition according to any one of Claims 1 to 4, **characterized in that** the fillers are non-fibrous fillers selected from the group consisting of: particulate fillers, lamellar fillers and/or exfoliable or non-exfoliable nanofillers such as alumina, carbon black, clays, zirconium phosphate, kaolin, calcium carbonate, copper, diatomaceous earths, graphite, mica, silica, titanium dioxide, zeolites, talc, wollastonite, polymeric fillers, beads of glass or glass powder.

6.  Composition according to any one of Claims 1 to 5, **characterized in that** the content of reinforcing fillers is between 50 to 80 % by weight of reinforcing filler, relative to the total weight of the composition.

7.  Composition according to any one of Claims 1 to 6, **characterized in that** the composition does not comprise impact modifiers.

8.  Injection-moulding process in which a composition according to any one of Claims 1 to 7 is introduced into an injection-moulding device and the moulding operation is then carried out.

9.  Moulded article comprising a composition according to any one of Claims 1 to 7.

**EP 2 201 067 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H06345960 A

**Littérature non-brevet citée dans la description**

- Flow response and microstructure of polymers reinforced with discontinuous fibers. **DAVIDSON T et al.** MATERIALS RESEARCH SOCIETY SYMPOSIUM PROCEEDINGS. MATERIALS RESEARCH SOCIETY, 1993, vol. 289, 231-235

- *Encyclopedia of Industrial Chemical Analysis,* 1973, vol. 17, 293

**10**